# NOUVEAU FASCICULE DE BREVET EUROPEEN

(11) **EP 0 049 659 B2**
(45) Date de publication et mention de la décision concernant l'opposition: **23.06.1993**
(45) Mention de la délivrance du brevet: 22.01.1986
(21) Numéro de dépôt: 81401514.5
(22) Date de dépôt: 30.09.1981
(51) Int. Cl.: G21C 17/00, G01S 5/18, G08B 21/00

(54) **Procédé et dispositif de surveillance acoustique d'une installation industrielle**
Verfahren und Einrichtung zur akustischen Überwachung einer Industrieanlage
Method and device for the acoustic control of an industrial installation

(30) Priorité: 02.10.1980 FR 8021163
(43) Date de publication de la demande: 14.04.1982
(73) Titulaire: FRAMATOME, 92400 Courbevoie (FR)
(72) Inventeur: Marini, Jean, F-78160 Marly le Roi (FR); Audenard, Bernard, Les Gallionets F-78630 Orgeval (FR)
(74) Mandataire: Bouget, Lucien

(56) Documents cités:
- DE-A- 2 607 791
- FR-A- 2 164 031
- FR-A- 2 304 088
- US-A- 3 343 126
- US-A- 3 858 439
- ELECTRONICS AND COMMUNICATIONS IN JAPAN, vol. 61-C, no. 10, octobre 1978, SILVER SPRING (US) HAJIME HATANO et al.: "Acoustic-Emission Source Location Using "Face-Centered" Transducer Arrays", pages 97-104

## Description

L'invention concerne un procédé de surveillance acoustique d'une installation industrielle pour détecter la formation ou l'évolution de phénomènes accidentels pouvant se produire dans au moins une zone définie de cette installation, par captage d'ondes acoustiques accompagnant ces phénomènes.

Dans une installation industrielle complexe et de grandes dimensions telle qu'un réacteur nucléaire à eau sous pression, il peut se produire des phénomènes accidentels non souhaités tels que des ruptures, des frottements entre des pièces voisines ou des chocs entre un élément de structure du réacteur et un organe mécanique tel qu'un boulon, une rondelle ou un élément d'une vanne qui s'est détaché de la structure du réacteur et qui se déplace à grande vitesse dans celui-ci. Un tel organe mécanique détaché de la structure du réacteur est entraîné par l'eau de refroidissement du réacteur qui circule avec une très grande vitesse.

En effet, dans les installations telles que les réacteurs nucléaires à eau sous pression, du fait des contraintes subies par les pièces en service, ces contraintes étant par exemple d'origine thermique ou mécanique, il peut se produire des ruptures locales plus ou moins complètes qui peuvent évoluer jusqu'au point où une pièce se détache de la structure et est entraînée par l'écoulement pour devenir un corps migrant dans l'installation. L'effet des contraintes est d'ailleurs renforcé par la corrosion.

D'autre part, avant que la pièce se détache complètement de la structure ou dans le cas où la liaison entre la pièce et la structure n'est pas entièrement détruite, il peut se produire des frottements ou chocs entre la pièce qui se détache et la partie de l'installation située à son voisinage.

Il importe dans tous les cas de détecter le plus rapidement possible les phénomènes de rupture, de frottement ou de choc et de surveiller leur évolution, avant que ceux-ci ne causent des dommages importants dans l'installation.

On a proposé depuis longtemps d'utiliser des capteurs acoustiques placés sur la structure de l'installation ou des microphones placés dans l'air au voisinage de cette structure dans laquelle peuvent se produire ces phénomènes de destruction, pour capter ou enregistrer les ondes acoustiques accompagnant les phénomènes accidentels qu'on désire détecter très rapidement.

On a par exemple installé au voisinage des zones où la probabilité d'impact est grande ou au voisinage des pièces dont la probabilité de rupture est importante des capteurs acoustiques chargés de fournir un signal en réponse à une sollicitation par des ondes acoustiques.

Cependant, dans une installation industrielle complexe en fonctionnement, des ondes acoustiques peuvent être produites à divers endroits de l'installation, par exemple du fait que des organes de machine comme des pompes ou des ventilateurs sont en fonctionnement pratiquement continu.

Dans le cas des réacteurs nucléaires, des bruits d'origines très diverses tels que le bruit accompagnant la fermeture du clapet d'une vanne, le mouvement des barres de contrôle ou d'autres organes mobiles peuvent créer des signaux acoustiques de type impulsionnel qui sont observés aux bornes des capteurs et qui peuvent être pris pour des signaux résultant d'un impact ou d'un frottement entre deux pièces ou encore de la propagation de fissures au moment de la rupture d'une pièce.

Il est très difficile d'opérer une discrimination efficace entre les signaux dus à des phénomènes accidentels et les signaux dus à d'autres causes dont l'origine peut se situer dans une partie éloignée de l'installation.

En particulier, les dispositifs connus actuellement ne permettent pas de distinguer une faible sollicitation acoustique dont la source est proche d'une sollicitation plus importante créée à grande distance.

Par exemple, dans le cas des réacteurs nucléaires, les dispositifs connus ne permettent pas de distinguer des ondes acoustiques dues à un impact sur le fond d'un générateur de vapeur et la fermeture d'un clapet à une très grande distance de la zone où est situé le capteur. L'exploitation des enregistrements des capteurs par un dispositif électronique de surveillance nécessite donc de prendre en compte l'allure des signaux et de les analyser en utilisant un oscilloscope.

De plus, un parasite électrique peut être perçu par la chaîne de surveillance comme une impulsion acoustique ce qui est la cause de fausses alarmes.

On a par ailleurs proposé des dispositifs utilisables dans le domaine du contrôle non destructif des matériaux permettant de localiser parfaitement une source d'émissions acoustiques, par exemple un défaut de la structure ou du matériau émettant des ondes acoustiques sous l'effet de contraintes.

Dans le brevet FR-A 2 164 031 est décrit un dispositif de localisation des sources d'émission d'ondes de contrainte dans des caissons résistant à la pression qui utilise des détecteurs acoustiques placés de façon déterminée par rapport aux zones critiques du caisson, telles que les jonctions soudées. Ce dispositif qui peut être utilisé aussi bien pour le contrôle que pour la surveillance des caissons permet de déterminer le capteur sur lequel les ondes acoustiques arrivent en premier ainsi que les intervalles de temps séparant l'arrivée des ondes sur ce capteur de l'arrivée des ondes sur les autres capteurs.

Dans le brevet FR-A 2 304 088, sont décrits un procédé et un appareil pour la localisation d'émissions acoustiques dans des installations complexes et de grande dimension. On utilise un réseau de capteurs et l'ensemble de l'installation est divisé en une pluralité de zones de contrôle ayant chacune au moins trois capteurs acoustiques. Les zones adjacentes ont des capteurs communs et la première zone pour laquelle on enregistre une réception acoustique sur l'ensemble de ses capteurs est identifiée.

De tels ensembles de mesure et de traitement de signaux acoustiques peuvent être utilisés avec efficacité pour contrôler ou surveiller l'apparition de défauts dans des caissons résistant à la pression tels que les cuves de réacteurs nucléaires. Dans le cas du brevet FR-A2 164 031, on contrôle de préférence les zones susceptibles de donner naissance à de tels défauts et dans le cas du brevet FR-A 2 304 088, on contrôle la totalité de la cuve en utilisant un ensemble relativement complexe comportant un grand nombre de capteurs. Dans tous les cas, on utilise une méthode de triangulation et les différences de temps de propagation des ondes arrivant sur les différents capteurs pour localiser les défauts. Etant donné les conditions d'utilisation des appareils de contrôle et le fait qu'on capte des ondes de contrainte, une discrimination sévère des ondes captées n'est pas envisagée. En revanche, dans le cas de la surveillance des impacts ou autres phénomènes accidentels de corps migrants dans un réacteur nucléaire en fonctionnement, une discrimination très stricte des ondes acoustiques suivant leur origine est nécessaire étant donné les nombreux chocs non accidentels subis par l'installation en fonctionnement. Les procédés et appareils de l'art antérieur ne permettent pas de réaliser une telle discrimination des phénomènes acoustiques suivant leur origine spatiale, de manière simple et rapide.

Le but de l'invention est donc de proposer un procédé tel que décrit dans la revendication 1 qui permet une discrimination très simple et très sûre des ondes acoustiques suivant leur origine spatiale.

Dans le cas où l'on désire diminuer l'étendue des zones ou dans les cas où l'on désire déterminer de façon plus précise la source d'émission des bruits, on peut perfectionner le procédé de surveillance.

Afin de bien faire comprendre l'invention on va décrire plusieurs modes de réalisation de dispositifs de surveillance permettant de mettre en oeuvre le procédé suivant l'invention.

Sur la figure 1 est représenté de façon schématique un dispositif permettant de déterminer l'ordre d'arrivée d'ondes acoustiques issues d'une même source, sur un ensemble de quatre capteurs.
La figure 2 représente les signaux traités par le dispositif de la figure 1.
La figure 3 montre un dispositif à quatre capteurs utilisés pour la surveillance d'une installation industrielle.
La figure 4 représente la répartition spatiale de zones qui peuvent être surveillées à l'aide d'un dispositif à quatre capteurs.

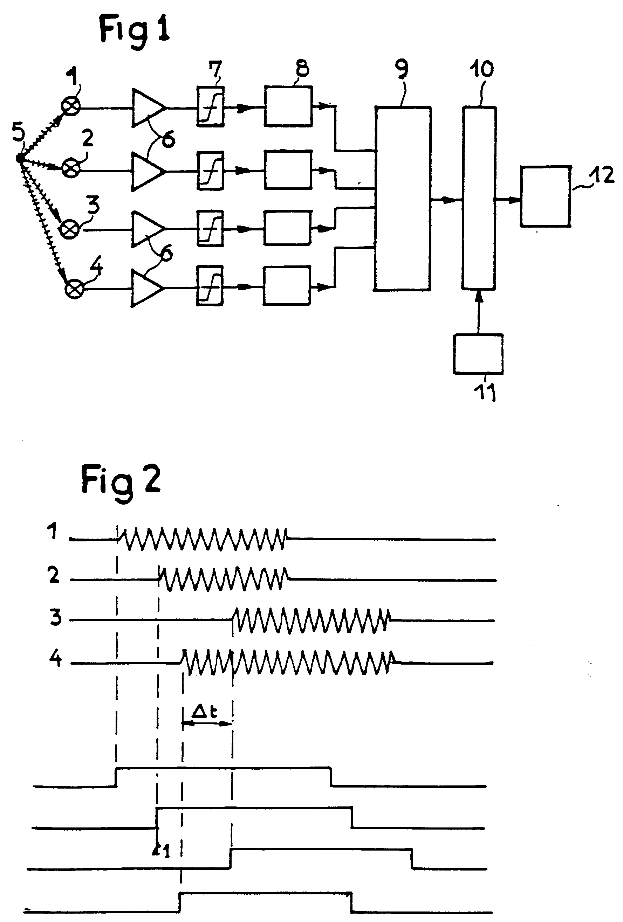

Sur la figure 1 on voit une source d'émissions acoustiques 5 émettant des ondes dans toutes les directions à l'intérieur d'un matériau constituant l'installation sur laquelle sont disposés à des endroits déterminés quatre capteurs 1, 2, 3 et 4.

Ces capteurs sont disposés selon une maille dont la forme géométrique est déterminée par le calcul ou l'expérience de façon à optimiser les traitements ultérieurs des ondes acoustiques et qui est disposée en partie ou en totalité dans la zone à surveiller.

Les capteurs 1, 2, 3 et 4 transforment les ondes acoustiques reçues de la source 5 en signaux haute fréquence représentés à la figure 2. Ces signaux haute fréquence sont traités par une chaîne de traitement comportant, pour chacun des capteurs, un amplificateur6, un discriminateur de signaux 7 et un circuit monostable d'aveuglement 8.

En sortie des modules d'aveuglement 8, les signaux représentés à la partie inférieure de la figure 2 sont envoyés dans un module de traitement 9 enfermant une logique d'encodage pour l'attribution d'un code à chacun des signaux suivant leur ordre d'arrivée dans le module 9 et leur ligne d'émission, chaque ligne d'émission correspondant à l'un des capteurs 1, 2, 3 et 4.

Les signaux codés sont ensuite envoyés à un comparateur 10 qui reçoit également un signal prédéterminé élaboré dans un module 11 et correspondant à un certain ordre de réception des signaux par les capteurs 1, 2, 3 et 4.

Les signaux en sortie des modules 8 sont des signaux de durée et d'amplitude constantes commençant à l'instant initial Ti correspondant à l'instant précis où le signal haute fréquence commence à être émis par le capteur correspondant, c'est-à-dire à l'instant où les ondes acoustiques arrivent à ce capteur. Seuls les écarts de temps AT séparant la réception des signaux sur chacun des capteurs sont maintenus dans ces signaux résultant comme caractéristiques des signaux émis par les capteurs.

De ce fait, le module 9 comporte une logique d'encodage extrêmement simple pour la détermination de la séquence d'arrivée des signaux sur les capteurs qui peut être déterminée sans aucun calcul.

De même, au niveau du comparateur 10, la comparaison entre la séquence enregistrée au niveau du module 9 et correspondant à l'ordre d'arrivée des ondes acoustiques sur les capteurs peut être comparée facilement à la séquence prédéterminée élaborée par le module 11.

Si une identité entre ces deux séquences est enregistrée au niveau du comparateur 10, celui-ci agit sur un circuit monostable 12 qui déclenche une alarme indiquant qu'un événement prévu s'est effectivement produit.

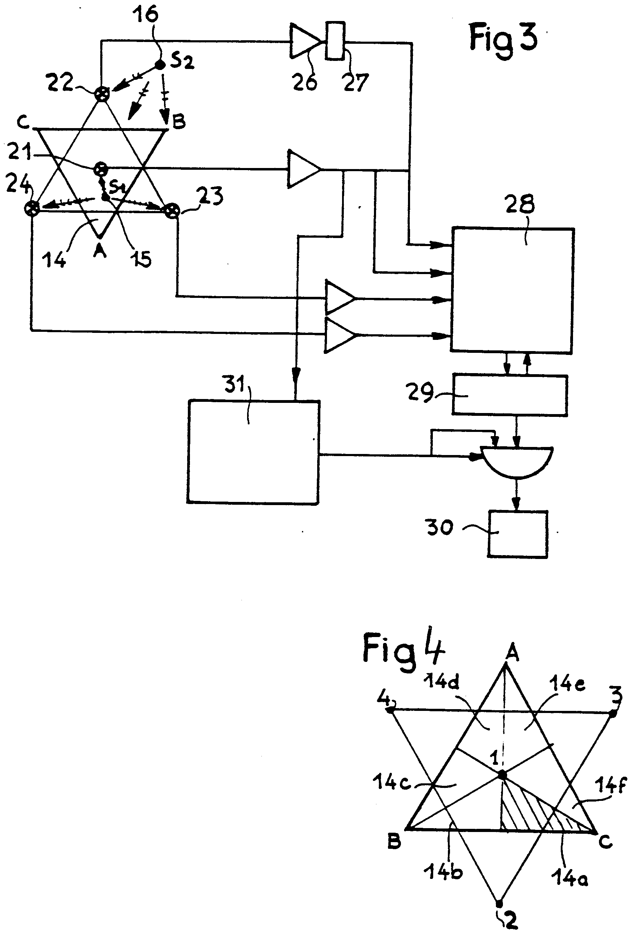

Sur la figure 3, on voit un mode d'application d'un dispositif de détermination de séquence d'arrivée des signaux à un ensemble de capteurs disposés sur une installation dont on veut surveiller une zone de position et de forme particulières.

La zone 14 à surveiller a la forme d'un triangle équilatéral ABC et les capteurs acoustiques 21,22,23 et 24 sont disposés pour le capteur 21 au centre du triangle ABC et pour les capteurs 22, 23, et 24 symétriques du capteur 21 par rapport aux côtés BC, AB et AC respectivement du triangle équilatéral ABC constituant la zone de surveillance 14.

Les signaux acoustiques reçus par les capteurs et transformés en signaux haute fréquence sont amplifiés par des amplificateurs 26 et des discriminateurs 27 pour la transformation des signaux comme décrits plus haut.

Les signaux sont ensuite traités dans un module de détermination de l'ordre logique d'arrivée 28 et un comparateur 29 permet de déterminer s'il y a identité ou non entre l'ordre d'arrivée sur les capteurs et un ordre d'arrivée choisi à l'avance.

S'il y a identité un signal d'autorisation est émis et ce signal déclenche une alarme ou l'impression d'une information au niveau d'une unité d'impression 30.

Dans le cas d'une zone 14 telle que représentée à la figure 3, il suffit de déterminer le capteur qui reçoit le premier l'émission acoustique. En effet, si nous supposons une source d'émissions acoustiques 15 disposée à l'intérieur de la zone 14 et une zone d'émissions acoustiques 16 disposée à l'extérieur, il est bien évident que la source 15 est plus proche du capteur 21 que des autres capteurs 22, 23 et 24 et qu'inversement la source 16 est plus proche de l'un au moins des capteurs 22,23 et 24 que du capteur 21.

Il suffit donc de déterminer quel est le capteur qui reçoit le premier l'émission acoustique pour savoir si la source d'émissions acoustiques est disposée dans la zone 14 ou à l'extérieur de cette zone. En effet, les ondes acoustiques se déplacent à vitesse constante dans le matériau constituant l'installation dont on surveille la zone 14 et le temps de parcours de ces ondes acoustiques ne dépend que de la distance de la source d'émissions acoustiques au capteur qui la reçoit.

Si le capteur recevant le premier l'émission acoustique est le capteur 21, il est donc sûr que la source d'émissions acoustiques se trouve dans la zone 14 et qu'inversement si le capteur recevant le premier l'émission acoustique est un capteur différent (22, 23 ou 24), il est également sûr que la source d'émissions acoustiques 16 se trouve à l'extérieur de la zone 14.

La seule comparaison qui est faite au niveau du comparateur 29 est donc une comparaison entre le code du signal venant du capteur ayant reçu le premier l'émission acoustique et le code prédéterminé correspondant à une émission acoustique reçue en premier par le capteur 21.

S'il y a identité entre ces deux codes, le signal d'autorisation est émis et l'on déclenche en plus un traitement dans une unité 31, sur le signai émis par le capteur 21, afin de déterminer par exemple l'énergie de la source acoustique située dans la zone 14 placée sous surveillance.

Ce traitement peut par exemple être constitué par un comptage du nombre d'impulsions du signal amplifié et transformé par le discriminateur 27.

Sur la figure 4 on a représenté une disposition de capteurs identique à celle représentée à la figure 3 et on a de plus délimité, à l'intérieur de la zone 14, des zones 14a, 14b, 14c, 14d, 14e et 14f dont les frontières sont les médiatrices du triangle ABC passant par le centre du triangle où se trouve le capteur 1.

Si l'on considère la zone 14a qui se trouve limitée par une partie du côté BC du triangle ABC et par deux médiatrices du triangle formé par les capteurs, on s'aperçoit que tout point de cette zone 14a est plus proche du capteur 1 que des autres capteurs et que tout point de cette zone 14a est plus proche du capteur 2 que du capteur 3.

Si les signaux arrivent donc sur les capteurs 1, 2, 3, 4 de façon que ces signaux acoustiques arrivent d'abord au capteur 1, puis au capteur 2 et enfin au capteur 3, le point d'émission de ces signaux est disposé à l'intérieur de la zone 14a.

En considérant l'ordre d'arrivée au-delà du premier capteur, il y a donc une possibilité de délimiter des zones plus précises pour le repérage du point d'émission des ondes acoustiques.

Il est possible de délimiter avec précision des zones de la surface sur laquelle se trouvent les capteurs en utilisant des mesures des écarts de temps séparant l'arrivée des ondes acoustiques sur un ensemble de capteurs disposés suivant un réseau sur la surface de l'installation à surveiller.

L'invention a été décrite surtout dans le cadre de son utilisation dans le cas des réacteurs nucléaires mais il est également possible d'envisager son utilisation dans une installation industrielle quelconque, en particulier dans une installation industrielle complexe et de grande dimension telle qu'une raffinerie ou une installation pétrochimique.

## Revendications

1. Procédé de surveillance acoustique d'une installation industrielle pour détecter, très rapidement après son apparition et de façon certaine, un phénomène accidentel, par captage d'ondes acoustiques accompagnant ce phénomène, au contact ou au voisinage de l'installation, utilisant quatre points de captage (1, 2, 3, 4) et l'ordre d'arrivée des ondes acoustiques aux différents points de captage, comportant les étapes suivantes
- on définit la position des points de captage (1, 2, 3, 4) par rapport à une zone à surveiller dont le contour a la forme d'un triangle equilateral : un point de captage (1, 21) est placé au centre dudit triangle equilateral c'est-à-dire à égale distance des sommets, et les autres points de captage (2, 3, 4) 21 22- 23- 24) sont placés en des positions symétriques du premier point de captage (1, 21) respectivement par rapport aux côtés du triangle equilatéral, les segments de droite délimités d'une part par le point de captage central (1, 21) et d'autre part par l'un des autres points de captage (2, 3, 4 21,22- 23- 24) s'étendant ainsi selon les médiatrices respectives des côtés du triangle équilatéral
- on détermine l'ordre d'arrivée des ondes acoustiques aux points de captage (1, 2, 3, 4 21, 22, 23, 24)
- on compare l'ordre d'arrivée des ondes acoustiques aux points de captage à un ordre d'arrivée prédéterminé correspondant à l'apparition d'un phénomène accidentel dans la zone à surveiller,
- et on déclenche une alarme si les ondes acoustiques parviennent en premier au point de captage situé au centre du triangle équilatéral

2. Procédé de surveillance acoustique selon la revendication 1, caractérisé par le fait qu'on prédétermine l'ordre d'arrivée des ondes acoustiques aux points de captage (1, 2, 3, 4) dans le cas d'un phénomène accidentel se produisant dans une partie de la zone à surveiller limitée par un côté du triangle equilateral et deux médiatrices du triangle equilateral et qu'on déclenche l'alarme si l'ordre d'arrivée des ondes acoustiques aux points de captage correspond à l'ordre d'arrivée prédéterminé.

3. Dispositif de surveillance acoustique d'une installation industrielle pour la mise en oeuvre d'un procédé suivant l'une quelconque des revendications 1 et 2, comportant un ensemble de quatre capteurs (1, 2, 3, 4, 21, 22,23-24) acoustiques disposés suivant la description du procédé suivant la revendication 1 et associés chacun à un amplificateur de signal (6), un discriminateur de signal (7) et un module (8) transformant le signal reçu en un signal carré de durée constante dont l'instant initial correspondant exactement à l'instant où le signal arrive sur le capteur (1, 2, 3, 4), 21-22-23-24 ; le dispositif comporte en outre pour chaque zone à surveiller :
- un module logique d'encodage (9) pour la détermination de l'ordre d'arrivée du signal sur les capteurs (1, 2, 3, 4) sans calcul des écarts de temps entre les arrivées du signal sur les capteurs,
- un comparateur (10) de cet ordre d'arrivée avec un ordre d'arrivée codifié prédéterminé, en fonction de ladite zone à surveiller,
- et un module (12) permettant l'émission d'un signal de déclenchement d'une alarme, en fonction des indications du comparateur (10).

4. Dispositif de surveillance acoustique suivant la revendication 3, caractérisé par le fait que les capteurs (21,22,23,24) sont reliés par l'intermédiaire d'amplificateurs-discriminateurs (26, 27) à un module (28) de détermination de l'ordre d'arrivée des ondes acoustiques sur les capteurs (21, 22,23,24) et à un moyen de comparaison (29) de cet ordre avec l'ordre prédéterminé en fonction de la zone à surveiller pour le déclenchement d'une alarme et d'un traitement supplémentaire de comptage sur le signal venant du capteur qui a reçu le premier l'onde acoustique.

## Patentansprüche

1. Verfahren zur akustischen Überwachung einer Industrieanlage, um eine Störung durch Aufnehmen der diese Störung begleitenden akustischen Wellen in Kontakt mit oder in der Nähe dieser Anlage sicher und schnell nach dem Auftreten der Störung zu erfassen, wobei vier Aufnahmepunkte (1, 2, 3, 4) und die Einlaufreihenfolge der akustischen Wellen an den verschiedenen Aufnahmepunkten verwendet werden,
bestehend aus den folgenden Schritten:
- die Lage der Aufnahmepunkte (1, 2, 3, 4) wird bezogen auf einen zu überwachenden Bereich, dessen Kontur die Form eines gleichseitigen Dreiecks hat, festgelegt: ein Aufnahmepunkt (1, 21) wird im Mittelpunkt des genannten gleichseitigen Dreiecks, d. h. in gleichem Abstand zu den Spitzen angeordnet, und die anderen Aufnahmepunkte (2, 3, 4, 22, 23, 24) werden in Positionen angeordnet, die bezogen auf den ersten Aufnahmepunkt (1, 21) bzw. auf die Seiten des gleichseitigen Dreiecks symmetrisch liegen, wobei die Geradensegmente, die einerseits von dem zentralen Aufnahmepunkt (1, 21) und andererseits von einem der anderen Aufnahmepunkte (2, 3, 4, 22, 23, 24) begrenzt werden, sich auf diese Weise gemäß den jeweiligen Mittelsenkrechten der Seiten des gleichseitigen Dreiecks erstrecken,
- die Einlaufreihenfolge der akustischen Wellen an den Aufnahmepunkten (1,2,3,4,21, 22, 23, 24) wird bestimmt,
- die Einlaufreihenfolge der akustischen Wellen an den Aufnahmepunkten wird mit einer vorbestimmten Einlaufreihenfolge verglichen, die dem Auftreten einer Störung in dem zu überwachenden Bereich entspricht, und
- ein Alarmsignal wird ausgelöst, wenn die akustischen Wellen den im Mittelpunkt des gleichseitigen Dreiecks gelegenen Aufnahmepunkt zuerst erreichen.

2. Verfahren zur akustischen Überwachung nach Anspruch 1, dadurch gekennzeichnet, daß die Einlaufreihenfolge der akustischen Wellen an den Aufnahmepunkten (1,2,3,4) bei Auftreten einer Störung in einem Teil des zu überwachenden Bereichs, der durch eine Seite des gleichseitigen Dreiecks und durch Mittelsenkrechte des gleichseitigen Dreiecks begrenzt ist, vorbestimmt wird und daß das Alarmsignal ausgelöst wird, wenn die Einlaufreihenfolge der akustischen Wellen an den Aufnahmepunkten der vorbestimmten Einlaufreihenfolge entspricht.

3. Vorrichtung zur akustischen Überwachung einer Industrieanlage zur Durchführung eines Verfahrens nach einem der Ansprüche 1 und 2, bestehend aus einer Gruppe von vier Schallaufnehmern (1, 2, 3, 4, 21, 22, 23, 24), die gemäß der Beschreibung des Verfahrens nach Anspruch 1 angeordnet sind und jeweils mit einem Signalverstärker (6), einem Signaldiskriminator (7) und einem Modul (8) verbunden sind, das das empfangene Signal in ein Rechtecksignal konstanter Dauer umwandelt, dessen Anfangszeitpunkt exakt dem Zeitpunkt entspricht, zu dem das Signal an dem Schallaufnehmer (1, 2, 3, 4, 21, 22, 23, 24) einläuft; wobei die Vorrichtung des weiteren für jeden zu überwachenden Bereich
- ein logisches Kodiermodul (9) zur Bestimmung der Einlaufreihenfolge des Signals an den Schallaufnehmern (1, 2, 3, 4) ohne Berechnung der Zeitintervalle zwischen den Einlaufzeiten des Signals an den Schallaufnehmern,
- eine Vergleicheinheit (10) zum Vergleich dieser Einlaufreihenfolge mit einer abhängig von dem genannten zu überwachenden Bereich vorbestimmten kodierten Einlaufreihenfolge, und
- ein Modul (12) zur Aussendung eines Alarmauslösesignals in Abhängigkeit von den Angaben der Vergleichereinheit (10) enthält.

4. Vorrichtung zur akustischen Überwachung nach Anspruch 3, dadurch gekennzeichnet, daß die Schallaufnehmer (21, 22, 23, 24) über Verstärker-Diskriminatoren (26, 27) an ein Modul (28) zur Bestimmung der Einlaufreihenfolge der akustischen Wellen an den Schallaufnehmern (21, 22, 23, 24) sowie an ein Vergleichmittel (29) zum Vergleich dieser Reihenfolge mit der abhängig von dem zu überwachenden Bereich vorbestimmten Einlaufreihenfolge zum Auslösen eines Alarmsignals und einer zusätzlichen Zähl-Signalverarbeitung des Signals, das von dem Schallaufnehmer kommt, der die akustische Welle als erster empfangen hat, angeschlossen sind.

## Claims

1. Method of acoustically monitoring an industrial plant for detecting very quickly after its occurrence and in a sure way, an incidental phenomenon, by a sensing of acoustic waves accompanying this phenomenon, in contact with or in the vicinity of the plant, using four sensing points (1, 2, 3, 4) and the order of arrival of the acoustic waves at the different sensing points, comprising the following steps,
defining the position of the sensing points (1, 2, 3, 4) relative to a zone to be monitored whose contour has the shape of an equilateral triangle: a sensing point (1, 21) being placed at the centre of said equilateral triangle, i.e. at equal distance from the vertices, and the other sensing points (2, 3, 4, 22, 23, 24) being placed in positions which are symmetrical with the first sensing point (1, 21) respectively relative to the sides of the equilateral triangle, the segments of a line between on one hand the central sensing point (1, 21) and on the other hand one of the other sensing points (2, 3, 4, 22, 23, 24) thus extending along the respective medians of the sides of the equilateral triangle,
determining the order of arrival of the acoustic waves at the sensing points (1, 2, 3, 4, 21, 22, 23, 24),
comparing the order of arrival of the acoustic waves at the sensing points with a predetermined order of arrival corresponding to the occurrence of an incidental phenomenon in the zone to be monitored,
and triggering an alarm if the acoustic waves arrive first at the sensing point located at the centre of the equilateral triangle.

2. Method of acoustically monitoring according to claim 1, characterized in that it comprises
determining the order of arrival of the acoustic waves at the sensing points (1, 2, 3, 4) in the case where an incidental phenomenon occurs in a part of the zone to be monitored bounded by one side of the equilateral triangle and two medians of the equilateral triangle,
and triggering the alarm if the order of arrival of the acoustic waves at the sensing points corresponds to the predetermined order of arrival.

3. Acoustic monitoring device for an industrial plant for carrying out a method according to claim 1 or 2, comprising a group of four acoustic sensors (1, 2, 3, 4, 21, 22, 23, 24) which are disposed in accordance with the recitation of the method according to claim 1 and are each associated with a signal amplifier 6, a signal discriminator 7 and a module 8 converting the signal received into a square signal of constant duration whose initial instant exactly corresponds to the instant at which the signal arrives at the sensor (1, 2, 3, 4, 21, 22, 23, 24); the device further comprises for each zone to be monitored:
an encoding logic module (9) for determining the order of arrival of the signal at the sensors (1, 2, 3, 4) without calculation of the intervals of time between the arrivals of the signal at the sensors,
a comparator (10) of this order of arrival with a predetermined codified order of arrival as a function of said zone to be monitored,
and a module (12) for emitting a signal for triggering an alarm as a function of the indications of the comparator (10).

4. Acoustic monitoring device according to claim 3, characterized in that the sensors (21, 22, 23, 24) are connected through amplifiers-discriminators (26, 27) to a module (28) for determining the order of arrival of the acoustic waves at the sensors (21,22,23,24) and to a means (29) for comparing this orderwith the predetermined order as a function of the zone to be monitored for triggering an alarm and a supplementary counting processing of the signal coming from the sensor which was the first to receive the acoustic wave.
